# EUROPÄISCHE PATENTANMELDUNG

(11) **EP 2 206 627 A2**
(43) Veröffentlichungstag der Anmeldung: **14.07.2010**
(21) Anmeldenummer: 09401053.5
(22) Anmeldetag: 23.12.2009
(51) Int. Cl.: B60P 7/12

(54) **Ladungssicherungsmittel**

(30) Priorität: 08.01.2009 DE 202009000010 U
(71) Anmelder: Schlobohm, Wolfgang, 27412 Kirchtimke (DE)
(72) Erfinder: Schlobohm, Wolfgang, 27412 Kirchtimke (DE)
(74) Vertreter: Hansen, Jochen

(57) **Zusammenfassung**

Die Erfindung betrifft ein Ladungssicherungsmittel (1) zur Sicherung von Ladungsstücken (2) auf einer Ladefläche eines Transportmittels gegen Verrutschen, Wegrollen und/oder Umkippen mit einem auf der Ladefläche aufgesetzten, aufliegenden und frei handhabbaren, flachen Grundträger (3), auf dem wenigstens zwei Aufnahmeelemente (4) zur Sicherung eines Ladungsstückes (2) angeordnet sind, wobei die Aufnahmeelemente (4) jeweils flach auf den Grundträger (3) herunterklappbar ausgebildet sind.

## Beschreibung

Die Erfindung betrifft ein Ladungssicherungsmittel zur Sicherung von Ladungsstücken auf einer Ladefläche eines Transportmittels gegen Verrutschen, Wegrollen und/oder Umkippen mit einem auf der Ladefläche aufgesetzten, aufliegenden und frei handhabbaren, flachen Grundträger, auf dem wenigstens zwei Aufnahmeelemente zur Sicherung eines Ladungsstückes angeordnet sind.

Derartige Ladungssicherungsmittel sind im Stand der Technik bekannt.

Beispielsweise ist aus der DE 203 00 548 U1 eine wiederverwendbare Halterung für Sperrgut mit einer im Wesentlichen länglichen Ausdehnung bekannt, bei der ein Basiselement vorhanden ist, an dem wenigstens ein verstellbares Adapterelement so angeordnet ist, dass das zu haltende Sperrgut an wenigstens zwei Stellen sowohl vertikal als auch horizontal auf dieser Anordnung aufliegt.

Weiter ist aus der GB 2 360 831 A eine Ladungssicherung für ein rundes Ladungsobjekt bekannt. Der Gegenstand bezieht sich hierbei auf zwei dreieckig geformte Klötze, die mittels zweier in der Länge einstellbarer Röhren miteinander verbunden sind. Hierdurch wird eine in der Länge variabel verstellbare Anordnung aufgezeigt, mittels der unterschiedliche, runde Ladungen gesichert werden können.

Ferner ist aus der US 4,653,967 A eine Anordnung zur Ladungssicherung mittels teleskopierbarer ausziehbarer Röhren bekannt, wobei die zwei ausziehbaren Röhren die Ladungssicherungsklötze miteinander variabel verbinden.

Die Ladung bei einer derartigen Ladungssicherung wird selbstverständlich mit Gurten oder dergleichen auf der Ladefläche fixiert.

Weiter ist aus der DE 20 2007 000 046 ein Ladungssicherungsmittel zur Sicherung von Ladungsstücken auf einer Ladefläche eines Fahrzeugs gegen Verrutschen, Wegrollen und/oder Umkippen mit auf der Ladefläche angeordneten Keilen bekannt, wobei ein frei handhabbarer, flacher Grundträger zur Auflage auf der Ladefläche vorgesehen ist, auf dem wenigstens zwei Keile zur Sicherung eines Ladungsstückes befestigt sind. Insbsondere ist hierbei die Aufbauhöhe im Nichtverwendungszustand besonders hoch und stellt bei Nichtverwendung ein Stauproblem dar.

Ausgehend von diesem Stand der Technik ist es daher Aufgabe der Erfindung, ein Ladungssicherungsmittel anzugeben, bei dem die Aufnahmeelemente auf der Ladefläche einfach ein- und ausklappbar sind, wobei insgesamt eine transportable Einheit Verwendung findet, die bei Nichtverwendung wenig Platz in Anspruch nimmt und zudem leicht zu handhaben ist.

Gelöst wird diese Aufgabe mit einem Ladungssicherungsmittel gemäß Anspruch 1.

Dadurch, dass die Aufnahmeelemente jeweils flach auf den Grundträger herunterklappbar ausgebildet sind, ist es möglich, das Ladungssicherungsmittel in einem Verwendungszustand zur Sicherung von Ladungsstücken auf einer Ladefläche vorzusehen und weiter das Ladungssicherungsmittel in einem Transportzustand bei Nichtverwendung vorliegen zu haben. Insbesondere ist der Platzbedarf bei Nichtverwendung des Ladungssicherungsmittels, wenn es ohne Ladungsstücke transportiert werden soll, deutlich reduziert. Gleichwohl wird die Sicherung von Ladungsstücken auf einer Ladefläche gegen Verrutschen, Wegrollen und / oder Umkippen gewährleistet. Das Ladungsstück wird in üblicher Weise auf der Ladefläche verzurrt und somit wird auch der lediglich auf der Ladefläche aufliegende Grundträger mit der Ladefläche des Fahrzeuges verbunden. Der Grundträger kann auch in einem Schienensystem der Ladefläche oder dgl. verankert werden, wobei dies jedoch nicht zwingend erforderlich ist.

Wenn das Aufnahmeelement aus zwei Ladungsaufnahmeelementen besteht, wobei beide jeweils einseitig auf einer Befestigungsseite mit einer lösbaren und variablen Befestigung mit dem Grundträger in je einem Befestigungspunkt verbunden sind, können zwei nebeneinander angeordnete Ladungen mit dem so gestalteten Aufnahmeelement gegeneinander abgesichert werden. Durch die lösbare und variable Befestigung kann die jeweilige Position der Aufnahmeelemente individuell an die Ladung angepasst werden.

Wenn das Aufnahmeelement aus einem Ladungsaufnahmeelement und einem Stützelement besteht, wobei entweder das Ladungsaufnahmeelement, das Stützelement oder beide jeweils einseitig auf einer Befestigungsseite mit einer lösbaren und variablen Befestigung mit dem Grundträger in je einem Befestigungspunkt verbunden sind, wird erreicht, dass die Aufnahmeelemente ausreichend das Ladungsstück gegen Verrutschen, Wegrollen und/oder Umkippen sichern. Insbesondere ist eine Verstellmöglichkeit gegeben, um die Aufnahmeelemente entsprechend der aufzunehmenden Ladungsstücke anzupassen, wobei gleichzeitig eine Verstellbarkeit des Ladungsaufnahmeelementes und/oder des Stützelementes besteht. Die Flexibilität des Ladungssicherungsmittels wird somit erhöht.

Wenn das Ladungsaufnahmeelement und/oder das jeweils zugeordnete Stützelement schwenkbar um deren Befestigungspunkte ausgestaltet sind, lassen sich das Ladungsaufnahmeelement und/oder das jeweils zu behandelnde Stützelement einfach auseinander- und zusammenklappen bzw. runter- und hochklappen.

Dadurch, dass das Ladungsaufnahmeelement an seiner befestigungsfernen Seite eine Aufnahme für die befestigungsferne Seite des jeweils zugeordneten Stützelementes aufweist, wird eine kraftschlüssige Kombination aus Ladungsaufnahmeelement und dem Stützelement realisiert, die die auftretenden Kräfte durch die Ladungsstücke auf das Ladungsaufnahmeelement und das Stützelement über die entsprechende Aufnahme verteilt. Alternativ können auch zwei Ladungsaufnahmeelemente ein am Grundträger befestigtes Aufnahmeelement bilden, wobei sich die beiden befestigungsfernen Seiten der Ladungsaufnahmeelemente einander abstützen. Hierzu ist es besonders vorteilhaft, die Dimensionierung der Aufnahmeelemente gering zu halten, da die besondere Ausgestaltung der Aufnahmeelemente an sich eine gute Kraftverteilung gewährleistet und so Belastungsspitzen verhindert werden, die zur Zerstörung oder Verformung führen können.

Eine besonders bevorzugte Ausführungsform ergibt sich dadurch, dass verschiedene Befestigungspunkte am Grundträger vorgesehen sind, um die Aufnahmeelemente zueinander mit einem an das zu sichernde Ladungsstück angepassten Abstand anzuordnen. Die verschiedenen Befestigungspositionen erlauben eine Anpassung des Abstandes der zwei Aufnahmeelemente zueinander, so dass unterschiedlich geformte Ladungsstücke mittels des Ladungssicherungsmittels gegen Verrutschen, Wegrollen und/oder Umkippen gesichert werden können.

Insbesondere sind die verschiedenen Befestigungspunkte als Lochreihen am Grundträger ausgebildet, wobei die Aufnahmeelemente entsprechend der Ladungsstücke in der gewünschten Position mit einem Befestigungsmittel befestigt werden können. Der Abstand der Lochreihen ergibt sich durch ein sinnvoll vorgegebenes Rastermaß, um das die Abstände zwischen den Aufnahmeelementen veränderbar sind. Weiter ist es durch das Rastermaß möglich, eine entsprechende geforderte Flexibilität in der Anpassung zu realisieren.

Beispielsweise kann das Befestigungsmittel ein Steckbolzen sein, der die Aufnahmelemente mit dem Grundträger verbindet, da insbesondere der Steckbolzen eine besonders einfache Befestigung der Aufnahmeelemente bei gleichzeitig hoher Festigkeit und Stabilität bei Ladungsbetrieb unter rauhen Bedingungen gewährleistet.

Alternativ weisen die Aufnahmeelemente als leicht lösbare Befestigung Bolzenstummel auf, die in die Lochreihen des Grundträgers eingreifen. Bevorzugt sind dabei die gegenüberstehenden Bolzenstummel so ausgebildet, dass zunächst ein Bolzenstummel mit einer etwas größeren Länge durch ein Loch einer Lochreihe gesteckt wird, dann das Aufnahmeelement so weit eingeführt wird, dass der gegenüberliegende Bolzenstummel kürzerer Länge ebenfalls in das zugeordnete Loch der gegenüberliegenden Lochreihe einfügbar ist. Somit ist ein Verstellen der Aufnahmeelemente auf dem Grundträger ohne Werkzeuge durch einfaches Einstecken möglich.

Bei Verwendung eines leicht anzubringenden und schnell wieder zu lösenden Befestigungsmittels bietet sich für den Transport von leeren Ladungssicherungsmitteln die Möglichkeit, die einzelnen Elemente der Aufnahmeelemente nach Größen auf unterschiedliche Grundträger aufzusetzen, um so gleiche Höhen der leeren Ladungssicherungsmittel zu erhalten. Dies dient insbesondere der besseren Stapelbarkeit der leeren Ladungssicherungsmittel.

Dadurch, dass der Grundträger teilbar ausgebildet ist, wobei ein erstes Grundträgerteil mit einem zweiten Grundträgerteil verbindbar ist und verschiedene Befestigungspositionen am ersten und/oder zweiten Grundträgerteil vorgesehen sind, um die Aufnahmelemente auf jedem Grundträgerteil zueinander mit einem an das zu sichernde Ladungsstück angepassten Abstand anzuordnen, lässt sich die erfindungsgemäße Einstellung des Abstandes der Aufnahmeelemente individuell auf das zu sichernde Ladungsstück einstellen. Hierbei besteht insbesondere der Vorteil darin, dass bei kleineren zu sichernden Ladungsstücken auch das Gesamtmaß des Grundträgers durch die überlappende Befestigung beider teilbar ausgebildeten Grundträgerteile verringert wird, so dass Überstände des Grundträgers vermieden werden.

Bei dieser Ausgestaltung sind bevorzugt das Ladungsaufnahmeelement und das Stützelement positionsfest an jedem Grundträgerteil angeordnet, wodurch die Variabilität nur noch zwischen den zwei Grundträgerteilen hergestellt werden muss. Eine Anpassung der Ladungsaufnahmeelemente bzw. der Stützelemente oder beider ist nicht zwingend erforderlich. Die positionsfeste Ausgestaltung kann hierbei durch verschweißte Bolzen an den entsprechenden Drehpunkten realisiert sein, um so eine hohe Festigkeit des Ladungssicherungsmittels zu gewährleisten. Selbstverständlich kann trotz des teilbar ausgebildeten Grundträgers auch eine lösbare Befestigung der Aufnahmeelemente vorgesehen werden.

Bei Nichtgebrauch des Ladungssicherungsmittels ist es weiterhin möglich die Aufnahmeelemente flach auf den Grundträger runterzuklappen, um so nur ein geringes Stauvolumen auf oder unter der Ladefläche des Fahrzeugs zu benötigen. Die Grundträger bzw. die Grundträgerteile können beispielsweise stapelbar ausgebildet sein. Die Stapelung kann derart erfolgen, dass auf eine Oberseite eines Grundträgers ein umgekehrt liegender Grundträger mit dessen Oberseite aufliegt. Hierdurch kann ein Versatz in der Höhe zwischen den Grundträgern verhindert werden, falls einzelne Elemente der Aufnahmeelemente höher als die Grundträger sind.

Bei der Ausgestaltung mit teilbaren Grundträgern sind bevorzugt die verschiedenen Befestigungspositionen am Grundträgerteil, an das das andere Grundträgerteil in gewünschter Position, insbesondere mit einem Steckbolzen, ansetzbar ist, zur Einstellung und Anpassung an das Ladungsstück zu verwenden.

Die Lochreihen an wenigstens einem Grundträgerteil ermöglichen somit ähnlich zu der Einstellung der Aufnahmeelemente eine Anpassungsmöglichkeit des Abstandes der Aufnahmeelemente zueinander. Diese Anpassung erfolgt in rasterartigen Schritten der vorgegebenen Lochreihen. Auch hier ist bevorzugt eine Befestigung mittels Steckbolzen mit geeigneter Sicherung derselben vorgesehen.

Dadurch, dass der Grundträger ein längliches Blechformteil mit einer ebenen Grundplatte zur Auflage auf der Ladefläche und aufgekanteten Längsrändern ist, wobei die Längsränder die Lochreihen für die Befestigung der Aufnahmeelemente und/oder der Verbindung zwischen den Grundträgerteilen aufweisen, lässt sich das Ladungssicherungsmittel fertigungstechnisch einfach herstellen. Das Formteil weist durch die Aufkantungen hohe Festigkeit bei gleichzeitig relativ geringem Gewicht auf. Etwaige Aussparungen zur Gewichtsreduktion sind hierbei bevorzugt vorgesehen, wobei die Aussparungen in der ebenen Grundplatte anzuordnen sind. Insbesondere wird die Ladekapazität des Fahrzeuges durch das Ladungssicherungsmittel nicht übermäßig beeinflusst und das Bedienpersonal kann das Ladungssicherungsmittel gut handhaben. Unterschiedlich dimensionierte Grundträger können derart ausgestaltet werden, dass sie ineinander stapelbar sind und somit bei Nichtgebrauch einen möglichst geringen Stauraum einnehmen.

Dadurch, dass an den Aufnahmeelementen bewegliche Fallen vorgesehen sind, die in ihrer Schwerkraft- und/oder Federkraft beaufschlagten Grundstellung ein laterales Verschieben der Aufnahmeelemente zwischen den aufgekanteten Längsrändern des Grundträgers verhindern, wird ein Herausrutschen der Aufnahmeelemente aus dem Grundträger bei einer Ausgestaltung mit Bolzenstummeln bei in Grundstellung befindlicher Falle sicher verhindert.

Dadurch, dass mehrere längliche Blechformteile als Grundträger vorgesehen sind, die in Längsrichtung mittels eines Verbindungsmittels verkettbar sind, wobei das Verbindungsmittel zu beiden Seiten der aufgekanteten Längsränder jeweils zwei Bolzenstummel aufweist, die in die jeweils letzten Löcher der stirnseitig aneinanderstoßenden Grundträger einführbar sind, können mehrere Grundträger in Längsrichtung miteinander verbunden werden. Beispielsweise können die Grundträger eine Länge von 2,40 m aufweisen, so dass sie auf Ladeflächen von Lastkraftwagen auch quer zur Fahrtrichtung montierbar sind. Soll jedoch eine Ladung in Längsrichtung gesichert werden, die ein größeres Ausmaß hat als die Grundträgerlänge, können entsprechend mehrere Grundträger jeweils mit einem Verbindungsmittel miteinander verbunden werden. Das Einführen des Verbindungsmittels in die Löcher der Lochreihen erfolgt dabei bevorzugt genauso wie bei den Aufnahmeelementen. Auch hier ist eine Falle vorgesehen, die ein unbeabsichtigtes Lösen des in die Löcher eingesteckten Verbindungsmittels verhindert. Bevorzugt greift die Falle wenigstens einseitig hinter den aufgekanteten Längsrand des Grundträgers.

Wenn die beiden Grundträgerteile Blechformteile sind, wobei das zweite Grundträgerteil in das erste Grundträgerteil passt und die Grundträgerteile einen teleskopierbaren Grundkörper bilden, ergeben sich eben solche Vorteile, wobei die beiden ineinandergreifenden Grundträgerteile wie ein teleskopierbarer Grundträger wirken und dem Gesamtbauteil bei entsprechender Überlappung auch eine hohe Biegefestigkeit geben.

Insbesondere weist die Lagerungsfläche des Aufnahmeelementes zur Aufnahme der Ladungsstücke einen Winkel zwischen 30° und 45° zum Grundträger auf.

Insbesondere ist es vorteilhaft, die Lagerungsfläche vollflächig auszugestalten und mit einem rutschhemmenden Belag zu versehen. Der rutschhemmende Belag verhindert insbesondere laterale Bewegungen des zu sichernden Ladungsstückes senkrecht zur Verbindungslinie zwischen den beiden sich gegenüberstehenden Aufnahmeelementen.

Nachfolgend wird ein Ausführungsbeispiel der Erfindung anhand der beiliegenden Zeichnungen detailliert beschrieben.

Darin zeigt:
- Fig. 1: eine seitliche Ansicht eines Ladungssicherungsmittels in einer ersten Ausführungsform,
- Fig. 2: eine Detailansicht des Ladungssicherungsmittels in der ersten Ausführungsform und
- Fig. 3: eine seitliche Ansicht des Ladungssicherungsmittels in der ersten Ausführungsform in einem zusammengeklappten Zustand.

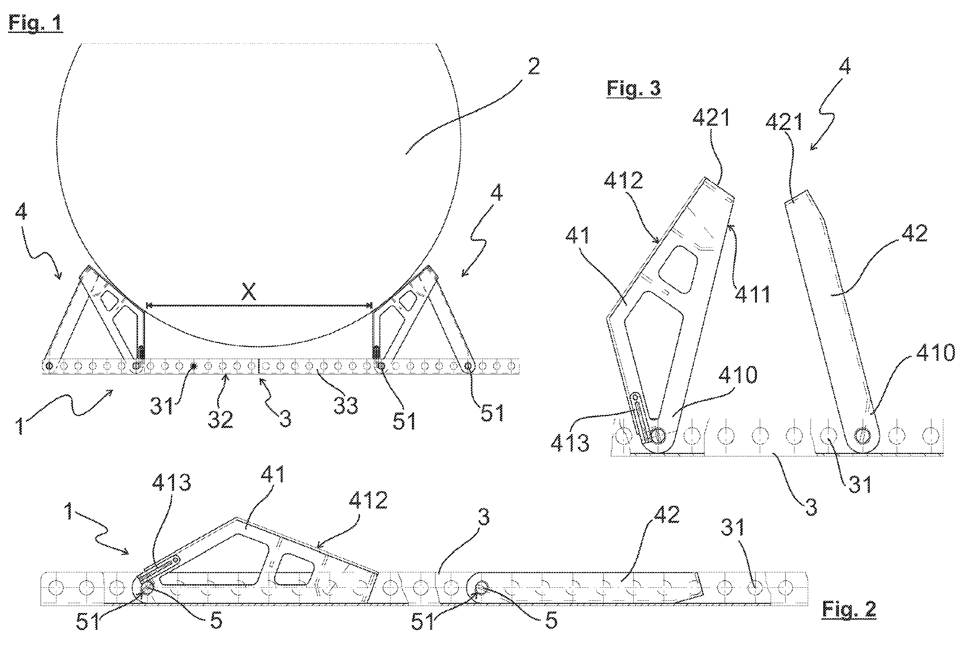

Das in Fig. 1 dargestellte Ladungssicherungsmittel 1 weist einen Grundträger 3 und zwei Aufnahmelemente 4 auf. Die Aufnahmeelemente 4 sind auf dem Grundträger 3 angeordnet. Der Grundträger 3 besteht aus einer Grundplatte 32 und seitlichen Längsrändern 33. Die Längsränder 33 an beiden Seiten der Grundplatte 32 weisen zusammen mit der Grundplatte 32 im Querschnitt eine U-Form auf. Hierzu kann der Grundträger 3 ein längliches Blechformteil sein, das aus einer ebenen Grundplatte 32 zur Auflage auf der Ladefläche besteht und mit aufgekanteten Längsrändern 33 ausgestaltet ist. Die Längsränder 33 weisen Lochreihen 31 auf. Diese Lochreihen 31 bestehen aus einzelnen Bohrungen in den Längsrändern 33 und dienen als Befestigungspunkte 51 für die Aufnahmeelemente 4. In den Befestigungspunkten 51 sind die Aufnahmeelemente 4 mit dem Grundträger 3 durch Befestigungsmittel kraftschlüssig verbunden.

Auf dem Ladungssicherungsmittel 1 ruht das Ladungsstück 2. Die Aufnahme des Ladungsstücks 2 erfolgt druch die Aufnahmeelemente 4. Die Aufnahmeelemente 4 sind zueinander mit einem Abstand X angeordnet. Der Abstand X ist variabel, um so unterschiedliche Ladungen aufzunehmen. In diesem Ausführungsbeispiel ist ein rundes Ladungsstück 2 auf dem Ladungssicherungsmittel 1 vorgesehen, was jedoch nicht beschränkend sein soll. Vielmehr ist hier jegliche Ausgestaltungsform von Ladungsstücken 2 denkbar, da die Aufnahmeelemente 4 in ihrer Ausgestaltung daran anpassbar sind.

In Fig. 2 ist das Ladungssicherungsmittel 1 in einem zusammengeklappten Zustand dargestellt. Die Aufnahmeelemete 4 bestehen aus jeweils einem Ladungsaufnahmeelement 41 und einem Stützelement 42. Das Stützelement 42 ist hier in Fig. 2 rechts dargestellt und das Ladungsaufnahmeelement 41 ist hier links dargestellt. Beide, das Ladungsaufnahmeelement 41 als auch das Stützelement 42 sind jeweils mittels einer Befestigung 5 am Befestigungspunkt 51 mit dem Grundträger 3 verbunden. Um den jeweiligen Befestigungspunkt 51 herum ist sowohl das Ladungsaufnahmeelement 41 als auch das Stützelement 42 drehbar angeordnet.

Das Ladungsaufnahmeelement 41 weist hierbei eine spezifische Ausgestaltungsform auf, die an unterschiedliche Ladungsstücke 2 durch Auswechselung des einen Teils des Aufnahmeelementes 4, nämlich des Ladungsaufnahemelementes 41, anpassbar ist.

Das Ladungsaufnahmeelement 41 weist weiter eine Falle 413 auf, die dazu dient, im im Grundträger 3 aufgenommenen Zustand ein laterales Verschieben des Ladungsaufnahmeelementes 41 zwischen den aufgekanteten Längsrändern 33 des Grundträgers 3 zu verhindern. Dies ist bei einer Ausgestaltung mit Bolzenstummeln erforderlich, um ein versehentliches Lösen des Aufnahmeelementes 4 vom Grundträger 3 zu vermeiden. Bevor ein Aufnahmeelement 4, hier das Ladungsaufnahmeelement 41 aus dem Grundträger 3 entnommen werden kann, muss die schwerkraftbedingt in ihrer Grundstellung befindliche Falle 413 angehoben, das Ladungsaufnahmeelement 41 lateral zur Seite des längeren Bolzenstummels verschoben werden, so dass der kürzere Bolzenstummel aus dem Loch der Lochreihe 31 des Grundträgers 3 freikommt und das Ladungsaufnahmeelement 41 versetzt werden kann.

In Fig. 3 ist das Ladungssicherungsmittel 1 in einem aufgeklappten Zustand dargestellt. Hierbei ist besonders das Aufnahmeelement 4 in seinen Einzelbestandteilen, nämlich Ladungsaufnahmeelement 41 und Stützelement 42 dargestellt.

Das Ladungsaufnahmeelement 41 ist auf der Befestigungsseite 410 mit dem Grundträger befestigt. Auf der befestigungsfernen Seite 421 weist das Ladungsaufnahmeelement 41 eine Aufnahme 411 auf. Die Aufnahme 411 des Ladungsaufnahmeelementes 41 dient der Aufnahme des Stützelementes. Hierzu weist das Stützelement 42 auf dessen befestigungsferner Seite 421 eine Form auf, die dazu geeignet ist, in die Aufnahme 411 des Ladungsaufnahmeelementes 41 einzudringen. Das in diesem Ausführungsbeispiel dargestellte Stützelement 42 weist eine angeschrägte befestigungsferne Seite 421 auf. Auf der Befestigungsseite 410 des Stützelementes 42 ist das Stützelement 42 über eine Befestigung 5 am Befestigungspunkt 51 mit dem Grundträger 3 verbunden.

Nachfolgend wird beispielshaft erläutert, wie ein Ladungssicherungsmittel 1 aus seinem eingeklappten Zustand in den Verwendungszustand überführt wird und mit Ladung entsprechend belegt wird:
Zunächst liegt, wie in Fig. 2 zu sehen, das Ladungssicherungsmittel 1 in einem Grund- oder Transportzustand vor, bei dem die Aufnahmeelemente 4, bestehend aus dem Ladungsaufnahmeelement 41 und dem Stützelement 42, auseinandergeklappt und in den Grundträger 3 verschwenkt sind.

Die Aufnahmeelemente 4 werden durch Aufrichten des Ladungsaufnahmeelementes 41 und darauf folgendes Aufrichten des Stützelementes 42 mit anschließendem Einführen der befestigungsfernen Seite 421 des Stützelementes 42 in die Aufnahme 411 des Ladungsaufnahmeelementes 41 aufgestellt.

Eine etwaige Anpassung an unterschiedlich ausgestaltete Ladungsaufnahmeelemente 41 ist möglich, insbesondere ist hier die Variation der Befestigungspunkte 51 innerhalb des Grundträgers 3 durch die Lochreihen 31 in den Längsrändern 33 zu nutzen. Ferner ist eine Anpassung an das Ladungsstück 2 durch Veränderung des Anstellwinkels des Ladungsaufnahmeelementes 41 möglich, in dem der Abstand der Befestigungspunkte 51 am jeweiligen Aufnahmeelement 4 verändert wird.

Nachdem die Aufnahmeelemente 4 hergestellt worden sind, kann das Ladungssicherungsmittel 1 mit einem Ladungsstück 2 bestückt werden. Eine etwaige Anpassung an die Dimension des Ladungsstückes 2 kann durch das Verschieben der Aufnahmeelemente 4 erfolgen, so dass der Abstand X zwischen den beiden Aufnahmeelementen 4 justiert werden kann.

Ergänzend zu den klappbaren Aufnahmeelementen 4 können auch starre Aufnahmeelemente in dem Grundträger in der beschriebenen Weise befestigt werden. Starre Aufnahmeelemente können beispielsweise bei stets gleichartigen Ladungen vorgesehen werden.

### Bezugszeichenliste

- 1: Ladungssicherungsmittel
- 2: Ladungsstück
- 3: Grundträger
- 31: Lochreihen
- 32: Grundplatte
- 33: Längsränder
- 4: Aufnahmeelement
- 41: Ladungsaufnahmeelement
- 410: Befestigungsseite
- 411: Aufnahme
- 412: Lagerungsfläche
- 413: Falle
- 42: Stützelement
- 421: befestigungsferne Seite
- 5: Befestigung
- 51: Befestigungspunkt

- X: Abstand

## Patentansprüche

1. Ladungssicherungsmittel (1) zur Sicherung von Ladungsstücken (2) auf einer Ladefläche eines Transportmittels gegen Verrutschen, Wegrollen und/oder Umkippen mit einem auf der Ladefläche aufgesetzten, aufliegenden und frei handhabbaren, flachen Grundträger (3), auf dem wenigstens zwei Aufnahmeelemente (4) zur Sicherung eines Ladungsstückes (2) angeordnet sind, **dadurch gekennzeichnet, dass** die Aufnahmeelemente (4) jeweils flach auf den Grundträger (3) herunterklappbar ausgebildet sind.

2. Ladungssicherungsmittel (1) nach Anspruch 1, **dadurch gekennzeichnet, dass** das Aufnahmeelement (4) aus zwei Ladungsaufnahmeelementen (41) besteht, wobei beide jeweils einseitig auf einer Befestigungsseite (410) mit einer lösbaren und variablen Befestigung (5) mit dem Grundträger (3) in je einem Befestigungspunkt (51) verbunden sind.

3. Ladungssicherungsmittel (1) nach Anspruch 1, **dadurch gekennzeichnet, dass** das Aufnahmeelement (4) aus einem Ladungsaufnahmeelement (41) und einem Stützelement (42) besteht, wobei entweder das Ladungsaufnahmeelement (41), das Stützelement (42) oder beide jeweils einseitig auf einer Befestigungsseite (410) mit einer lösbaren und variablen Befestigung (5) mit dem Grundträger (3) in je einem Befestigungspunkt (51) verbunden sind.

4. Ladungssicherungsmittel (1) nach Anspruch 2 oder 3, **dadurch gekennzeichnet, dass** das/die Ladungsaufnahmeelement(e) (41) und/oder das jeweils zugeordnete Stützelement (42) schwenkbar um deren Befestigungspunkte (51) ausgestaltet sind.

5. Ladungssicherungsmittel (1) nach Anspruch 3 oder 4, **dadurch gekennzeichnet, dass** das Ladungsaufnahmeelement (41) an seiner befestigungsfernen Seite (421) eine Aufnahme (411) für die befestigungsferne Seite (421) des jeweils zugeordneten Stützelementes (42) aufweist.

6. Ladungssicherungsmittel nach einem der Ansprüche 1 bis 5, **dadurch gekennzeichnet, dass** verschiedene Befestigungspunkte (51) am Grundträger (3) vorgesehen sind, um die Aufnahmeelemente (4) zueinander mit einem an das zu sichernde Ladungsstück (2) angepassten Abstand (X) anzuordnen.

7. Ladungssicherungsmittel nach Anspruch 6, **dadurch gekennzeichnet, dass** die verschiedenen Befestigungspunkte (51) als Lochreihen (31) am Grundträger (3) ausgebildet sind, wobei die Befestigung (5) ein Steckbolzen ist, der durch die Lochreihen (31) greift und die Aufnahmelemente (4) mit dem Grundträger (3) verbindet, oder die Aufnahmeelemente (4) Bolzenstummel aufweisen, die in die Lochreihen (31) des Grundträgers (3) eingreifen.

8. Ladungssicherungsmittel nach einem der vorangehenden Ansprüche, **dadurch gekennzeichnet, dass** der Grundträger (3) teilbar ausgebildet ist, wobei ein erstes Grundträgerteil mit einem zweiten Grundträgerteil verbindbar ist und verschiedene Befestigungspositionen am ersten und/oder zweiten Grundträgerteil vorgesehen sind, um die Aufnahmelemente auf jedem Grundträgerteil zueinander mit einem an das zu sichernde Ladungsstück (2) angepassten Abstand (X) anzuordnen.

9. Ladungssicherungsmittel nach Anspruchs 8, **dadurch gekennzeichnet, dass** das Ladungsaufnahmeelement (41) und das Stützelement (42) positionsfest an jedem Grundträgerteil angeordnet sind.

10. Ladungssicherungsmittel nach Anspruch 8 oder 9, **dadurch gekennzeichnet, dass** die verschiedenen Befestigungspositionen am Grundträgerteil Lochreihen (31) sind, an das das andere Grundträgerteil in gewünschter Position, insbesondere mit einem Steckbolzen, ansetzbar ist.

11. Ladungssicherungsmittel nach einem der vorangehenden Ansprüche, **dadurch gekennzeichnet, dass** der Grundträger (3) ein längliches Blechformteil mit einer ebenen Grundplatte (32) zur Auflage auf der Ladefläche (2) und aufgekanteten Längsrändern (33) ist, wobei die Längsränder (33) die Lochreihen (31) für die Befestigung der Aufnahmeelemente (4) und/oder der Verbindung zwischen den Grundträgerteilen aufweisen.

12. Ladungssicherungsmittel nach Anspruch 7 und 11, **dadurch gekennzeichnet, dass** an den Aufnahmeelementen (4) bewegliche Fallen (413) vorgesehen sind, die in ihrer Schwerkraft- und/oder Federkraft beaufschlagten Grundstellung ein laterales Verschieben der Aufnahmeelemente (4) zwischen den aufgekanteten Längsrändern (33) des Grundträgers (3) verhindern.

13. Ladungssicherungsmittel nach Anspruch 11 oder 12, **dadurch gekennzeichnet, dass** mehrere längliche Blechformteile als Grundträger (3) vorgesehen sind, die in Längsrichtung mittels eines Verbindungsmittels verkettbar sind, wobei das Verbindungsmittel zu beiden Seiten der aufgekanteten Längsränder (33) jeweils zwei Bolzenstummel aufweist, die in die jeweils letzten Löcher der stirnseitig aneinanderstoßenden Grundträger einführbar sind.

14. Ladungssicherungsmittel nach einem der Ansprüche 8 und 11,
**dadurch gekennzeichnet, dass** die beiden Grundträgerteile Blechformteile sind, wobei das zweite Grundträgerteil in das erste Grundträgerteil passt und die Grundträgerteile einen teleskopierbaren Grundkörper bilden.

15. Ladungssicherungsmittel nach einem der vorangehenden Ansprüche, **dadurch gekennzeichnet, dass** die Lagerungsfläche (412) des Aufnahmeelementes (4) zur Aufnahme der Ladungsstücke (2) einen Winkel zwischen 30° und 45° zum Grundträger (3) aufweist.
